# EUROPEAN PATENT SPECIFICATION

(11) **EP 4 607 159 B1**
(45) Date of publication and mention of the grant of the patent: **25.03.2026**
(21) Application number: 24159433.2
(22) Date of filing: 23.02.2024
(51) Int. Cl.: G01F 23/24, H01M 10/48, H01M 10/613, H01M 10/6555, H01M 10/6568, H01M 50/691

(54) **BATTERY SYSTEM WITH INTEGRATED COOLING MANIFOLD**
BATTERIESYSTEM MIT INTEGRIERTEM KÜHLVERTEILER
SYSTÈME DE BATTERIE À COLLECTEUR DE REFROIDISSEMENT INTÉGRÉ

(43) Date of publication of application: 27.08.2025
(73) Proprietor: Samsung SDI Co., Ltd., Yongin-si, Gyeonggi-do 17084 (KR)
(72) Inventor: Dietz, Wolfgang, 8081 Pirching a. Traubenb (AT); Kleindienst, Wolfgang, 8010 Graz (AT); Konrad, Daniel, 8330 Feldbach (AT); Koletnik, Sandi, 8402 Werndorf (AT); Thomann, Patrick, 8411 Hengsberg (AT); Pretschuh, Markus, 8055 Graz (AT); Kurcik, Peter, 8505 St. Nikolai im Sausal (AT); Köppel, Andreas, 8144 Haselsdorf-Tobelbad (AT)
(74) Representative: Gulde & Partner

(56) References cited:
- EP-A1- 3 373 381
- EP-A1- 3 872 889
- KR-A- 20180 007 241
- US-A1- 2021 033 483

## Description

### Field of the Disclosure

The present disclosure relates to a battery system with an integrated cooling manifold in the housing. Further, a vehicle including the battery system is provided.

### Technological Background

Recently, vehicles for transportation of goods and peoples have been developed using electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery module.

A battery system may also include a battery management system (BMS), which is any suitable electronic system that is configured manage the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (e.g., a total voltage of the battery pack or battery modules and/or voltages of individual cells), temperature (e.g., an average temperature of the battery pack or battery modules, coolant intake temperature, coolant output temperature, and/or temperatures of individual cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the advantages and disadvantages of the other two topologies.

The BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as heaters, fans, air conditioning or liquid cooling means.

Battery systems according to the related art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defective system parts, e.g. a defective battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

To provide thermal control of the battery pack, a thermal management system is required to safely use the at least one battery module by efficiently emitting, discharging and/or dissipating heat generated from its rechargeable batteries. If the heat emission, discharge, and/or dissipation is not sufficiently performed, temperature deviations may occur between respective battery cells, such that the battery module may no longer generate a desired amount of power. In addition, an increase of the internal temperature can lead to abnormal reactions occurring therein, and thus, charging and discharging performance of the rechargeable deteriorates and the life-span of the rechargeable battery is shortened. Thus, cell cooling for effectively emitting, discharging, and dissipating heat from the cells is important.

In battery systems, for example automotive (High Voltage, HV-) battery systems, a cooling manifold unit(s) is usually located outside of a housing to supply a battery pack and coolant plates therein with a coolant and to drain the used coolant from the battery pack. This configuration is done since the coolant can leak out of the cooling manifold at manifold defects or interfaces thereof. In the case of leakage failure, the coolant can cause a short circuit at the high and also at low voltage areas which may result in operation failure or even hazardous battery states. Therefore, an external configuration is safe in terms of leakage failure since HV components cannot be affected by leakage. However, this configuration requires additional space and prevents a compact integration.

The prior art EP 3872 889 A1 discloses battery system including a leakage detection inside the battery system where leaked liquid in a tray is detected. The EP 3 373 381 A1 discloses a battery pack including a coolant leakage safety device, and more particularly, to a battery pack including a cooling passage for cooling a cell module and having a structure for guaranteeing safety when a coolant supplied through the cooling passage leaks. The KR 2018 0007241 A relates to a battery pack designed to ensure safety even when leakage occurs through a cooling line. The US 2021/033483 A1 relates to an apparatus for detecting coolant leakage that can accurately detect the coolant leakage height in the process of detecting coolant leakage in the event of coolant leakage in a battery pack.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided. The battery system includes a plurality of accommodation chambers disposed on top each other in a housing, wherein each accommodation chamber includes a plurality of battery cells and a cooling plate. The battery system further includes a cooling manifold inside the housing including a vertically extending portion which vertically extends along a side portion of the housing. The cooling manifold is connected to each of the plurality of cooling plates. The battery system includes a leakage protection member enclosing at least a portion of the cooling manifold, wherein the leakage protection member extends toward a bottom portion of the housing along the cooling manifold such that coolant that is leaked from the cooling manifold is drained toward the bottom portion of the housing. The battery system further includes a detection unit including at least one leakage sensor positioned at the bottom portion of the housing and configured to detect coolant drained toward the bottom portion by the leakage protection member.

According to another aspect of the present disclosure, a vehicle including the battery system is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic front view of a battery pack/system according to an embodiment,
- Fig. 2: illustrates a schematic front view of a battery pack/system according to an embodiment,
- Fig. 3: illustrates a schematic perspective view of a battery pack/system according to an embodiment,
- Fig. 4: illustrates a schematic view of a leakage protection member according to another embodiment,
- Fig. 5: illustrates a schematic perspective view of a leakage sensor according to an embodiment,
- Fig. 6: illustrates a schematic perspective view of a leakage sensor according to another embodiment,
- Fig. 7: illustrates a schematic perspective view of a leakage sensor according to another embodiment, and
- Fig. 8: illustrates a schematic perspective view of a leakage sensor according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof. It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

### General Concept

According to one aspect of the present disclosure, a battery system is provided which includes a plurality of accommodation chambers that are disposed on top each other in a housing, wherein each accommodation chamber includes a plurality of battery cells and a cooling plate is associated to the accommodation chamber. The battery system includes a cooling manifold that is disposed inside the housing. The cooling manifold includes a vertically extending portion which vertically extends along a side portion of the housing. The cooling manifold is connected to each of the plurality of cooling plates. A leakage protection member is provided which encloses at least a portion of the cooling manifold, wherein the leakage protection member extends toward a bottom portion of the housing along the cooling manifold such that coolant that is leaked from the cooling manifold is drained through the leakage protection member toward the bottom portion of the housing. The leakage protection member is formed and configured to drain coolant that is leaked from the cooling manifold toward a bottom portion of the housing. Further, a detection unit is provided which includes at least one leakage sensor positioned at the bottom portion of the housing. The detection unit is configured to detect coolant drained toward the bottom portion by the leakage protection member.

The leakage protection member may be formed as a hollow body. The housing may be the housing of a battery system or battery pack. The leakage protection member may form a channel between the cooling manifold and the leakage protection member so that coolant can flow along the channel toward the bottom portion. The term enclosing may include sleeving or completely surrounding. The cooling manifold may be configured to supply coolant to the cooling plates and to receive coolant from the cooling plates that was used in the cooling plate. A pump unit, e.g., an external pump unit, may be provided which provides a coolant flow through the cooling manifold and through the cooling plate. The bottom portion of the housing may be in other words a bottom plate. The coolant may be a liquid coolant.

The battery system as described above has an integrated cooling manifold in the housing. Despite of that the cooling manifold is inside the housing, the leakage protection member enclosing the cooling manifold prevents that leaked coolant can propagate outside of the leakage protection member. In fact, it is confined to flow in the channel formed between the leakage protection member and the cooling manifold. Thus, high-voltage components are protected from leaked coolant and even in case of leakage failure in the cooling manifold, the battery system can still be safely operated. Since the leakage protection member is extending to the bottom portion, the leaked coolant is drained to the bottom portion by using gravity. Further, since the at least one leakage sensor is provided on the bottom portion, a failure state indicating a leaking cooling manifold coolant can be readily detected by the detection unit using the leakage sensor since the leaked coolant is collected at the bottom portion. Therefore, a compact integration is provided due to the internal cooling manifold while ensuring a safe operation of the battery system also in a failure case of coolant leakage of the cooling manifold. As well, the failure case can be readily detected by the battery system. Thus, a warning may be provided or a battery disconnection operation so that the failure state can be lifted prior to continue operation. The leakage protection member acts like a hose to drain the leaked coolant.

In particular, a flow channel may be provided for to drain the coolant in the space between the cooling manifold and the enclosing leakage protection member.

According to one embodiment, the cooling manifold is connected to each of the plurality of cooling plates through an interface. The leakage protection member further covers the interface, such that the interface is enclosed by the leakage protection member. The leakage protection member is further configured to drain coolant that is leaked from the interface toward the bottom portion of the housing. The interface between the cooling manifold is a weak spot at which coolant may easily leak even when properly connected. Leakage may also be caused by connection failure in installation or caused during usage as the result of mechanical load or material deterioration. Thus, since the leakage protection member encloses the interface, leaked coolant is prevented to come into contact with HV (High Voltage) components or other electrical components of the battery system but is drained away from the interface toward the bottom portion.

According to another embodiment, the cooling manifold includes manifold branch portions. The interfaces to the cooling plates may be located at end portions of the manifold branch portions. The leakage protection member includes a leakage protection branch portion which encloses the manifold branch portions and the interfaces. Thus, the leakage protection member can be formed to protect also the manifold branch portions with the interface thereon. Thus, leakage protection is improved compared to a case, where the manifold branch portions are not enclosed the leakage protection member. The leakage protection member may act like a hose to drain the leaked coolant from the interface along the branch portion toward the bottom portion.

The cooling manifold includes manifold branch portions which branch from the vertically extending portion toward the interface to the cooling plates, wherein the leakage protection member includes a leakage protection branch portion which encloses the manifold branch portion and the interface. The leakage protection branch portion may thus form a channel for the leaked coolant to be drained into the vertically extending leakage protection portion and then toward the bottom portion. The leakage protection branch portion may have a slope. This may facilitate drainage process of the leaked coolant toward the bottom portion. In other embodiments, the branch portion is horizontal and the drainage based on the liquid pressure and confinement alone.

According to an embodiment, the leakage protection member is integrally formed. This has an effect of improved sealing compared to a case where the leakage protection member includes a plurality of segments which require connection interfaces. Therefore, coolant leakage protection is further improved. Alternatively, the leakage protection member may include connected segments.

According to an embodiment, the leakage protection member is made of a flexible plastic. This allows to enclose non-straight parts of the cooling manifold. This material property is helps to enclose the branch portions and/or the interface portion, in particular in the monolithic (integral) case. In other embodiments, silicone or rubber may be used.

According to an embodiment, the leakage protection member is connected to at least one side portion of the housing to seal an interface between two side portions of the housing. Thus, the leakage protection member can further be used to provide sealing to the side portions. Thus, the leakage protection member may seal the interface between side portions. Therefore, no further sealing member may be required besides the leakage protection member. In particular, in such case, the leakage protection member provides two functions of coolant leakage sealing as well as sealing the housing.

According to an embodiment, the leakage protection member extends toward the bottom portion of the housing, such that an end portion directed toward the bottom portion is closer to the bottom portion than high-voltage components of the battery system. Thus, the leaked coolant flowing out of the leakage protection member cannot come into contact with high-voltage components of the battery system or battery pack. This increases operation safety.

According to an embodiment, the end portion of the leakage protection member is spaced from the bottom portion of the housing. This allows the leaked coolant to easily flow out of the leakage protection member onto the bottom portion of the housing, where the coolant can be detected. No further guiding structures are needed in such case.

According to an embodiment, the battery system includes a plurality of leakage sensors located at different positions of the bottom portion. This ensures that leaked coolant may be detected also in a case where the battery system is tilted, for example when used in a vehicle at a slope. Further, redundancy is provided increasing functional safety.

According to an embodiment, the at least one leakage sensor includes a voltage supply and two electrical sensing elements spaced from each other on the bottom portion of the housing and connected to the voltage supply, wherein the detection unit is configured to detect coolant in response to determining a resistance drop and/or current increase between the electrical sensing elements due to the presence of coolant. Thus, assuming that the coolant has electrically conductive properties, i.e. higher compared to air, the resistance across the electrical sensing elements is reduced. Thus, a larger current can flow across the electrical sensing elements compared to when air is between the electrical sensing elements. Therefore, determining that the resistance has dropped and/or that the current increased indicates the presence of coolant. For example, the detection unit may detect a leaked coolant when a corresponding threshold (for resistance or current) is reached. In this manner, drained coolant which collects on the bottom portion of housing can be detected by the detection unit. The detection unit may include a control unit to evaluate the sensed data and to detect the leaked coolant. The electrical sensing elements may include sensing pads and/or the wires leading thereto. Also, the voltage supply may be provided in a sensor housing and the electrical sensing elements may be fixed to the sensor housing.

According to an embodiment, the at least one leakage sensor includes an electrical resistor, wherein the resistance value of the electrical resistor is higher than the resistance value across the electrical sensing elements in the presence of coolant. The electrical resistor may be connected in parallel to the electrical sensing elements. Higher may mean by a factor of more than 10 or by a factor of more than 100 or more than 1000. The resistance value across the electrical sensing elements in the presence of coolant may also be referred to as the expected resistance of the leaked liquid. Due to the additional resistance value, an open wire fault may be detected. Thus, the reliable functioning of the sensor can be tested. Further, depending on the functional safety requirements, two or more independent channels, the above referring to one channel, can be used for redundancy. Thus, functional safety can be increased.

According to an embodiment, the battery system may further include a rib that is positioned in the area between the sensing elements. The rib may be a block. The rib may increase the creepage distance between sensing elements so to decrease sensitivity to moisture and /or condensation to avoid a false detection. The rib may be in other words a block.

According to an embodiment, the rib includes a plurality of trenches. The trenches may be formed on an upper surface of the rib and/or a lower surface of the rib. This may further decrease the sensitivity to moisture and/or condensation, thus effectively increasing the creepage distance to avoid a false detection.

According to an embodiment, the leakage protection member includes an increased air gap between the sensing elements. For example, the distance between the sensing elements may be the width of the sensor housing. Therefore, the sensitivity to moisture and/or condensation may be further decreased to avoid a false detection.

According to an embodiment, the electrical sensing elements and/or an area between the electrical sensing elements is encased by a plastic housing, wherein the plastic housing includes an opening configured to allow coolant to enter through the opening. The opening may be configured to allow only the coolant to enter. Thus, dust and pollution may be prevented from affecting the detection. Thus, the sensitivity to pollution and dust is decreased.

According to another aspect of the present disclosure, a vehicle including the battery system is provided.

### Specific Embodiments

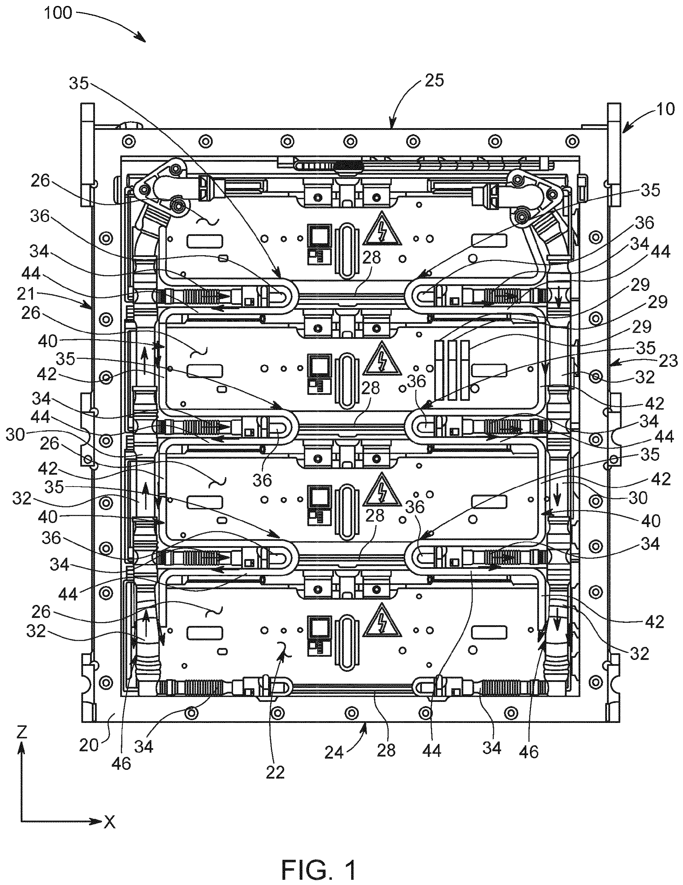

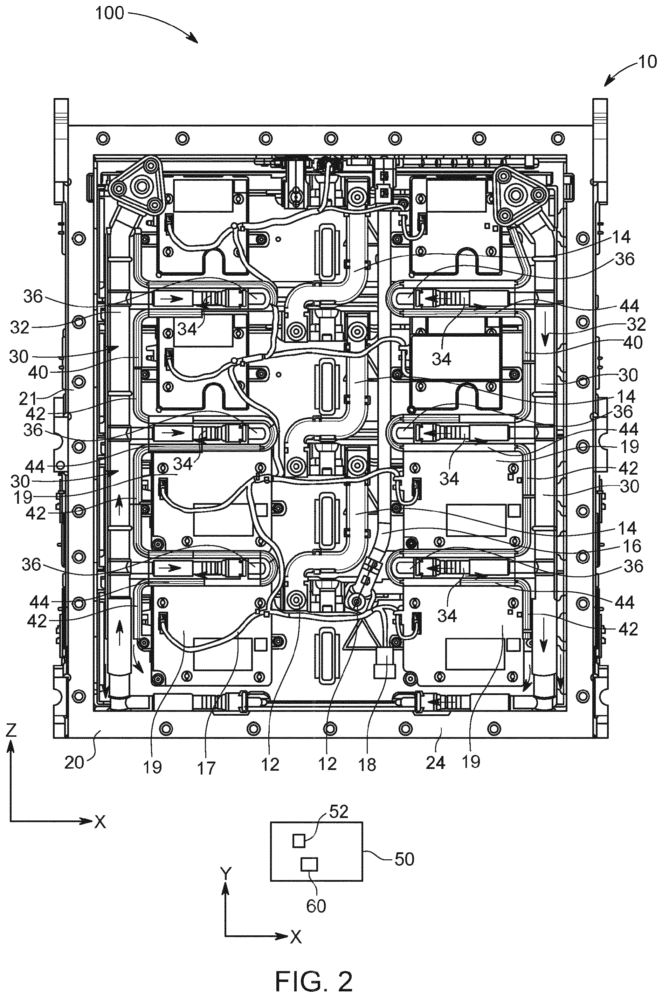

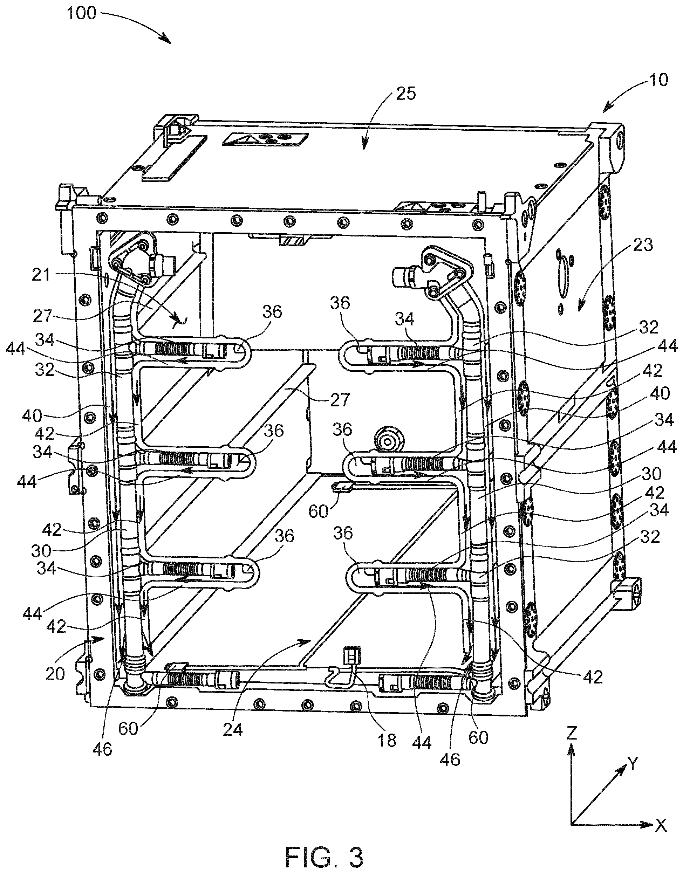

Fig. 1 shows a front view illustrating a battery system 100 and a battery pack 10. Fig. 2 shows a front view illustrating a battery system 100 and a battery pack 10 where a front cover is removed so that interior components of the battery pack 10 can be seen. Fig. 3 shows a perspective view of a battery system 100 in which a subset of interior components are removed for further illustration.

In the following, the description will refer to Figs. 1 to 3 in parallel for illustrating the present disclosure in more detail.

Referring to Fig. 1, the battery pack 10, and in the same way, the battery system 100 includes a housing 20. The housing 20 includes a plurality of side portions 21, ..., 23, i.e., a first side portion 21, a second side portion 22, a third side portion 23, and a fourth side portion (here not shown due to the front view). The first side portion 21 and the third side portion 23 may be face each other and the second side portion 22 and the fourth side portion may face each other. In the present view, the second side portion 22 may be a front portion and the fourth side portion may be a back portion. However, the front portion and the back portion may be exchanged with one another. Further, the housing 20 may include a bottom portion 24 and a top portion 25 as indicated in Figs. 1 to 3.

Referring to Fig. 1, the housing 20 includes a plurality of accommodation chambers 26. In the present example, four accommodation chambers 26 are provided. Referring to Figs. 1 and 2, the accommodation chambers 26 are disposed on top each other. In the present view, only projections thereof are indicated. The accommodation chambers 26, as demonstrated in Fig. 3, may be divided by support members 27 extending along the side portions 21, 23.

Each of the accommodation chambers 26 include a plurality of battery cells 29. Also here, only projections of the battery cells 29 are provided. The battery cells 29 may be located at predetermined positions and interconnected with each other in a predefined manner. However, the present disclosure is not restricted to a particular arrangement of the battery cells 29 therein.

In the above case, for each accommodation chamber 26, a cooling plate 28 is provided. For example, the cooling plate 28 may be provided as a bottom portion for each accommodation chamber 26 as indicated in Figs. 1 and 2. The cooling plate 28 may include cooling channels so that coolant flowing through the cooling plate 28 can dissipate heat therefrom.

Referring to Figs. 1 to 3, a cooling manifold 30 is provided which is disposed inside the housing 20. The cooling manifold 30 supplies coolant to the cooling plates 28.

The cooling manifold 30 further includes a vertically extending portion 32. The vertically extending portion 32 extends in vertical direction (z-direction) along the side portions 21, ..., 23 of the housing 20. Referring to Fig. 3 as well as Figs. 1 and 2, the cooling manifold 30 is located at a corner between the first side portion 21 and the second side portion 22. Further, the cooling manifold 30 is located in a corner between the second side portion 22 and the third side portion 23. However, the disclosure is not restricted thereto and the cooling manifold 30 may be located at other corners or other locations at the side portions 21, 22, 23.

Further, the cooling manifold 30 is connected to each of the plurality of cooling plates 28. Each cooling plate 28 may include a coolant inlet and a coolant outlet. Thus, the coolant can be supplied via the cooling manifold 30 into the cooling plate 28 through the coolant inlet and can be drained through the coolant outlet from the cooling plate 28 via the cooling manifold 30. An exemplary flow path of the coolant through the cooling manifold 30 is illustrated in Figs. 1 and 2 for mere illustrative purposes. However, there could be a problem of a leakage failure in the cooling manifold 30.

The battery system 100 may include various electrical components including HV (high voltage) components. An interior of the battery system 100 can be seen in Fig. 2 where covers are not shown for mere illustrative purposes.

Referring to Fig. 2, a HV supply module 12 for the battery system 100 is provided. Furthermore, a plurality of HV busbars 14 and a HV return 16 as examples of HV components of the battery system 100 are provided. In further addition thereto, a low voltage supply 18 is provided from which low voltage cables 17 are supplied to battery management units 19 of the battery system 100 or other power consumers as illustrated in Fig. 2. However, the electrical components including HV components may have various configurations so that the invention is not restricted to the particular configuration as illustrated in Fig. 2.

The HV components but also the low components should not come into contact with leaked coolant. The present disclosure prevents such contact as will be described further below.

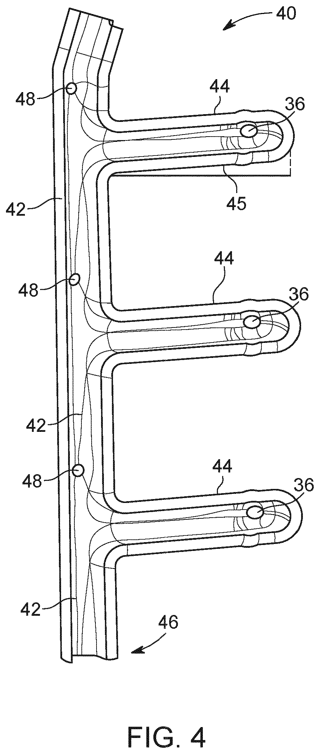

The battery system 100 includes a leakage protection member 40. The leakage protection member 40 may be a hollow body. This is can be seen more clearly seen in Figs. 3 and 4. An individual leakage protection member 40 according to an embodiment is further shown in Fig. 4.

Referring to Figs. 1 to 3, the leakage protection member 40 encloses at least a portion of the cooling manifold 30. That is, the leakage protection member 40 covers the portion of the cooling manifold 30. The leakage protection member 40 extends to the bottom portion 24 of the housing 20. Further, the leakage protection member 40 is configured to drain coolant that is leaked from the cooling manifold 30 toward the bottom portion 24 of the housing 20. A flow of leaked coolant is illustrated in Figs. 1, 2 and 3 by several arrows. The leakage protection member 40 thus forms a channel or hose for leaked coolant to be drained to the bottom portion 24 of the housing 20 between the cooling manifold 30 and the leakage protection member 40.

Since the leakage protection member 40 encloses a portion of the cooling manifold 30 toward the bottom portion 24 of the housing 20, a leakage occurring in this enclosed portion is drained to the bottom portion 24 of the housing 20. Thus, the leakage protection member 40 prevents direct contact of the coolant toward electronic components in the housing 20, for example HV components as described above for illustration.

In addition, a detection unit 50 is provided which works together with the leakage protection member 40. In Fig. 2, the detection unit 50 is only schematically shown. The detection unit 50 includes at least one leakage sensor 60 positioned at the bottom portion 24 of the housing 20. Referring to Fig. 3, for example, four leakage sensors 60 are provided at different locations of the bottom portion 24 as illustrated therein.

The leakage sensor 60 is configured to detect coolant that is leaked from the cooling manifold 30 and drained toward the bottom portion 24 by the leakage protection member 40. Thus, when a leakage failure has occurred in the cooling manifold 30 and the leaked coolant was drained to the bottom portion 24, the leakage sensor 60 can sense the leakage failure. That is, the leakage protection member 40 guides the leaked coolant toward the leakage sensors 60 onto the bottom portion 24. The evaluation of the sensor signals and the leakage detection may be performed by a control unit 52 of the detection unit 50.

Further, referring to Figs. 1 and 2, the cooling manifold 30 is connected to each of the plurality of cooling plates 28 through interfaces 36. The interfaces 36 refer to the coolant inlets and coolant outlets of the cooling manifold 30 and the cooling plate 28 and thus form the transition between the cooling manifold 30 and the cooling plate 28. Thus, for each cooling plate 28, two interfaces 36 are provided at which the cooling manifold 30 is connected with the respective cooling plate 28. Leakage failure at the interfaces 36 may however occur.

Referring to Figs. 1, 2 and 3, the leakage protection member 40 may cover the interface 36 so that the interface 36 is enclosed by the leakage protection member 40. This is also illustrated in Fig. 4 in which the leakage protection member 40 covers the interfaces 36. Therefore, the leakage protection member 40 is further configured to drain coolant that is leaked from the interfaces 36 toward the bottom portion 24 of the housing 20. Arrows indicating a leakage flow path are for example best illustrated in Fig. 3.

Thus, also the interfaces 36 are protected from leaking and the leaked coolant is drained to the bottom portion 24 while preventing a contact of the leaked coolant with the electrical components of the battery pack 10 and battery system 100. A leakage flow path is illustrated in the Figures 1-3. To guide the leaked coolant to the bottom portion 24, the leakage protection member 40 includes a vertically extending leakage protection portion 42 which extends along a portion of the cooling manifold 30 toward the bottom portion 24.

In more detail and referring to Figs. 1 - 3, the cooling manifold 30 includes manifold branch portions 34. These manifold branch portions 34 branch off from the vertically extending portions 32 toward the interfaces 36 to the cooling plates 28 as indicated in Figs. 1 - 3. The interfaces 36 to the cooling plates 28 are located at the manifold branch portions 34 and, for example, may be formed at end portions 35 thereof.

As shown in Fig. 4, the leakage protection member 40 includes a leakage protection branch portion 44. This leakage protection branch portion 44 encloses the manifold branch portions 34 of the cooling manifold 30. The leakage protection branch portion 44 may have a slope 45, e.g. a very small slope 45, so that leaked coolant is facilitated to be drained toward the bottom portion 24. However, in other embodiments, the leakage protection branch portion 44 may be horizontal and the flow is the caused by coolant pressure and the confinement in the leakage protection branch portion 44.

The leakage protection member 40 encloses the manifold branch portions 34 and the interfaces 36. Thus, the leakage protection member 40 is formed to enclose the manifold branch portions 34 together with the interfaces 36 to prevent leakage from these critical parts and thereby safely drains leaked coolant toward the bottom portion 24 where it can be detected.

Referring to Fig. 4, the leakage protection member 40 is integrally formed. This implies that the leakage protection member 40 does not include internal interfaces but is a continuous hollow body. Therefore, the leakage protection member 40 has optimal sealing properties and coolant is protected from leaking out of the leakage protection member 40.

The leakage protection member 40 may have a predetermine shape as shown in Fig. 4. The leakage protection member 40 may be made of a flexible plastic. Thus, the leakage protection member 40 may easily withstand bending and has improved sealing property at the interface 36 to the cooling plate 28 and at the branch point, where the flexible property helps to seal the interface 36.

The leakage protection member 40 may further provide an additional function. In an embodiment, the leakage protection member 40 is connected to at least one side portion 21, ..., 23 of the housing 20 to seal an interface between two (adjacent) side portions 21, 22. For example, the leakage protection member 40 seals the interface between the first side portion 21 and the second side portion 22. In another example, the leakage protection member 40 may seal the interface between the second side portion 22 and the third side portion 23. Thus, additional sealing members may be avoided or at least reduced. As shown in Fig. 4, fixation holes 48 are provided in the leakage protection member 40.

Referring again to Figs. 1 to 3, the leakage protection member 40 extends toward the bottom portion 24 of the housing 20 such that an end portion 46 directed toward the bottom portion 24 is closer to the bottom portion 24 than high-voltage components integrated in the housing 20. As shown in Fig. 2, the end portion 46 of the leakage protection member 40 is closer to the bottom portion 24 than for example the HV supply module 12 and/or the HV busbars 14. Thus, the coolant leaked toward the bottom portion 24 cannot contact with the high-voltage components in the housing 20.

Further as shown in Figs. 1 to 3, the end portion 46 of the leakage protection member 40 is spaced from the bottom portion 24 of the housing 20. Thus, the leaked coolant can simply flow out and be collected on the bottom portion 24 to be detected by the leakage sensors 60, even without any further

According to Fig. 3, a plurality of leakage sensors 60 located at different positions of the bottom portion 24 are provided. This may have the advantage that also in a use case where the battery pack 10 or battery system 100 is slightly tilted, drained liquid may be detected by at least one of the leakage sensors 60 where the coolant is collecting. Further, functional safety is improved due to redundancy.

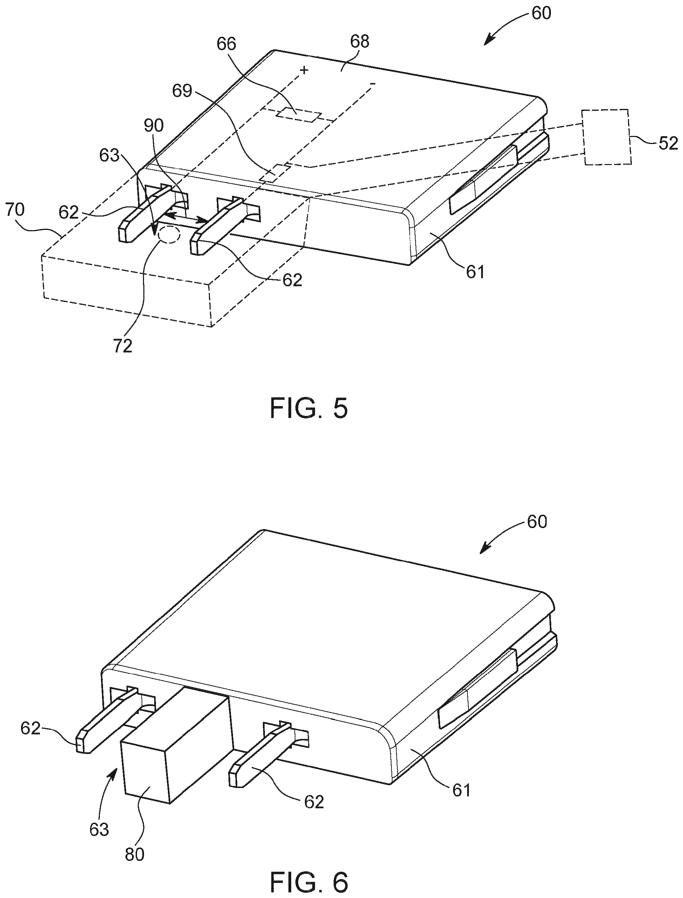

Referring now to Figs. 5 to 8, leakage sensors 60 according to various embodiments of the disclosure are shown. The general function is described with respect to Fig. 5. The leakage sensor 60 is configured to sense drained coolant as described in the following.

The at least one leakage sensor 60 may include a voltage supply 68. The voltage supply 68 may be an internal supply or an external supply provided to the leakage sensor 60. For example, the leakage sensor 60 may be connected to the low voltage supply 18 as shown in Fig. 3. In the embodiment of Fig. 5, the voltage supply 68 is provided in a sensor housing 61.

According to the embodiment, the leakage sensor 60 includes two electrical sensing elements 62 fixed to the sensor housing 61. The electrical sensing elements 62, e.g. pads, may be spaced from each other with respect to the bottom portion 24 of the housing 20 so that they are spatially separated from each other by a distance 90. Further, the two electrical sensing elements 62 are connected to the voltage supply 68. Thus, in case of that no coolant is present, an air gap is provided between the electrical sensing elements 62 so that the electrical resistance value is high across the electrical sensing elements 62.

In the case where leaked coolant is collected on the bottom portion 24 according to the various embodiments as described above, the coolant may be collected between the electrical sensing elements 62 thereby displacing air from an area 63 between the sensing elements 62. Thus, since the coolant is a liquid with higher conductivity than air, the resistance value across the electrical sensing elements 62 may be reduced. Thus, the leakage sensor 60 may sense the presence of coolant on the bottom portion 24.

Therefore, since the resistance value is reduced and the electrical current increased in the presence of the coolant as described above, the detection unit 50 including the leakage sensor 60 can detect the leaked coolant in response to determining a resistance drop and/or current increase between the sensing elements 62 due to the presence of drained coolant. A shunt resistor 69, with for example including an amplifier (here not shown) connected to the shunt resistor 69, may be provided to probe the current and/or the resistance. However, also other ways of determining the current/and or resistance may be provided. Further, threshold values may be provided to distinguish from common variations. The evaluation may be performed by a control unit 52, e.g. by an integrated battery management unit in the battery pack or battery system or by a central/another controller.

Further, referring to Fig. 5, the leakage sensor 60 may further include an electrical resistor 66 for open wire fault detection. The resistance value of the electrical resistor 66 is set higher than the resistance value across the electrical sensing elements 62 in the presence of coolant, for example by a factor of more than 10, more than 100 or more than 1000. Therefore, the resistance value may be predetermined to be higher (e.g. by the above factors) than the expected resistance value in the presence of the coolant being collected between the electrical sensing elements 62.

The electrical resistor 66 may for example be provided in parallel to the voltage supply 68. Thus, for example, in case of open wire fault and in the presence of coolant, a small predetermined current across the parallel electrical resistor 66 may be detected instead of the current across the sensing elements 62. Therefore, the electrical resistor 66 may be used to detect an open wire fault when being equipped with the fixed electrical resistor 66 of significantly higher resistance value than the expected resistance of the leaked coolant. Further, depending on the functional safety requirements, two or more independent channels (Fig. 5 showing one channel) can be used for redundancy.

Further, referring again to Fig. 5, the sensing elements 62 and/or the area 63 between the sensing elements 62 is enclosed by a casing 70. The casing 70 may be a plastic casing. In Fig. 5, the casing 70 is indicated by dashed lines.

The casing 70, as can be seen in Fig. 5, includes an opening 72. The opening 72 is configured to allow coolant to enter the casing 70 through the opening 72. Thus, the opening 72 may have a size such that coolant can enter the casing 70 to reach the sensing elements 62. However, in this case, dust and pollution may be prevented to contact the sensing elements 62. Thus, sensitivity to dust and pollution can be reduced by this embodiment.

Referring to Fig. 6, a leakage sensor 60 according to another embodiment is provided. The embodiment can be combined with the various embodiments as described with respect to Fig. 5. The leakage sensor 60 may further include a rib 80 or block that is positioned in the area 63 between the sensing elements 62. Thus, since moisture and condensation may be present inside the housing 20, the rib 80 may increase creepage distance. Thus, sensitivity to moisture and condensation in the housing 20 is reduced by placing the rib 80 in the area 63 between the sensing elements 62 so that only an actual event of coolant leakage is detected.

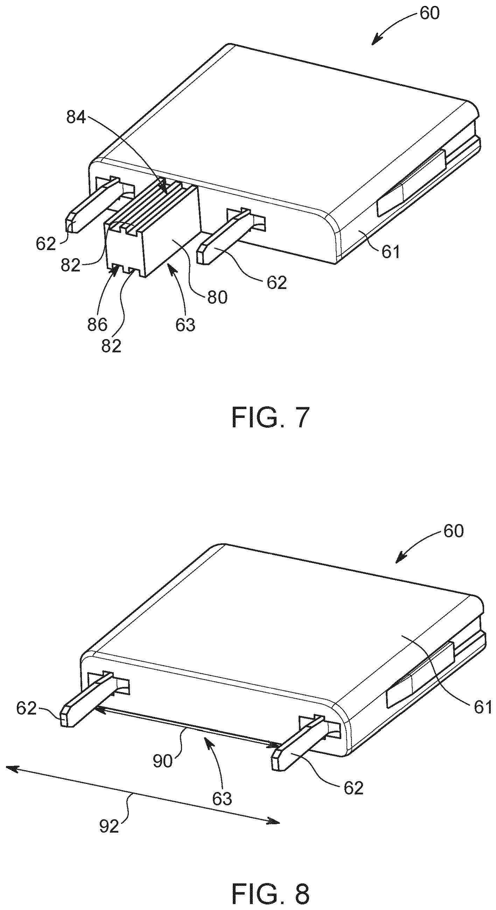

Referring to Fig. 7, a leakage sensor 60 according to another embodiment is provided. The embodiment can be combined with the various embodiments as described with respect to Fig. 5 and Fig. 6. Referring to Fig. 7, the leakage sensor 60 may further include a plurality of trenches 82 on the rib 80. For example, trenches 82 may be formed on an upper surface 84 of the rib 80. The trenches 82 may hold condensed moisture and condensation to prevent contact between the sensing elements 62 by condensates or moisture. This may further increase creepage distance. Further, trenches 82 may be formed on lower surface 86 of the rib 80 for further increasing creepage distance. Fig. 7 shows in the case of the trenches 82 are formed on both the upper surface 84 and the lower surface 86 of the rib 80.

Referring to Fig. 8, a leakage sensor 60 according to another embodiment is provided. The embodiment can be combined with the various embodiments as described with respect to Fig. 5, Fig. 6 and Fig. 7. The leakage sensor 60 may provide an increased distance 90 between the sensing elements 60. For example, the distance 90 may correspond to a width 92 of the sensor housing 61 and thus increases separation. This may further increase creeping distance and reduce the sensitivity to moisture and condensation in the battery back 10.

In a further embodiment, here not shown, a vehicle including the battery system 100 according to any of the above embodiments.

In summary, a battery system 100 and a battery pack 10 is provided with an integrated cooling manifold 30 inside the housing 20. Despite of that the cooling manifold 30 is inside the housing 20, the leakage protection member 40 enclosing the cooling manifold 30 prevents that leaked coolant can propagate outside of the leakage protection member and since the leakage protection member 40 is extending to the bottom portion 24, the leaked coolant can be readily detected by leakage sensors 60. The leaked coolant flow is confined to flow in the channel formed between the leakage protection member 40 and the cooling manifold 30. Thus, high-voltage components 12, 14, 16 are protected from leaked coolant and even in case of leakage failure in the cooling manifold, the battery system can still be safely operated. Therefore, a compact integration is provided due to the internal cooling manifold 30 while ensuring safe operation and leakage detection.

### Reference signs

- 10: battery pack

- 12: HV supply module (HV component)
- 14: HV busbar (HV component)
- 16: HV return (HV component)
- 17: low voltage (LV) cable
- 18: low voltage (LV) supply
- 19: battery management unit (BMU)

- 20: housing
- 21: first side portion
- 22: second side portion
- 23: third side portion
- 24: bottom portion
- 25: top portion

- 26: accommodation chamber
- 27: support member
- 28: cooling plate
- 29: battery cells

- 30: cooling manifold
- 32: vertically extending portion
- 34: manifold branch portion
- 35: end portion
- 36: interface

- 40: leakage protection member
- 42: vertically extending leakage protection portion
- 44: leakage protection branch portion
- 45: slope
- 46: end portion
- 48: fixation hole
- 50: detection unit
- 52: control unit

- 60: leakage sensor
- 61: sensor housing
- 62: sensing elements
- 66: electrical resistor
- 68: voltage supply
- 69: shunt resistor

- 70: casing
- 72: opening

- 80: rib
- 82: trench
- 84: upper surface
- 86: lower surface

- 90: distance
- 92: width

- 100: battery system

## Claims

1. A battery system (100), comprising:
a plurality of accommodation chambers (26) in a housing (20) with a plurality of side portions (21, 22, 23), wherein each accommodation chamber (26) comprises a plurality of battery cells (29) and a cooling plate (28);
a cooling manifold (30) inside the housing (20) comprising a vertically extending portion (32) which vertically extends along a side portion (21, 22, 23) of the housing (20), wherein the cooling manifold (30) is connected to each of the plurality of cooling plates (28);
**characterized in that**,
the plurality of accommodation chambers (26) is disposed on top of each other in the housing (20);
a leakage protection member (40) enclosing at least a portion of the cooling manifold (30), wherein the leakage protection member (40) extends toward a bottom portion (24) of the housing (20) along the cooling manifold (30) such that coolant that is leaked from the cooling manifold (30) is drained through the leakage protection member (40) toward the bottom portion (24) of the housing (20); and
a detection unit (50) comprising at least one leakage sensor (60) positioned at the bottom portion (24) of the housing (20) and configured to detect coolant drained toward the bottom portion (24) by the leakage protection member (40).

2. The battery system according to claim 1, wherein the cooling manifold (30) is connected to each of the plurality of cooling plates (28) through interfaces (36), and
the leakage protection member (40) further covers the interface (36), such that the interface (36) is enclosed by the leakage protection member (40), wherein the leakage protection member (40) is configured to drain coolant that is leaked from the interface (36) toward the bottom portion (24) of the housing (20).

3. The battery system according to claim 2, wherein the cooling manifold (30) comprises manifold branch portions (34) which branch from the vertically extending portion (32) toward the interfaces (36) to the cooling plates (28), wherein the leakage protection member (40) comprises a leakage protection branch portion (44) which encloses the manifold branch portion (34) and the interface (36).

4. The battery system according to any of the preceding claims, wherein the leakage protection member (40) is integrally formed.

5. The battery system according to any one of the preceding claims, wherein the leakage protection member (40) is made of a flexible plastic.

6. The battery system according to any one of the preceding claims, wherein the leakage protection member (40) is connected to at least one side portion (21, ..., 23) of the housing (20) to seal an interface between two side portions (21, 22, 23).

7. The battery system according to any one of the preceding claims, wherein the leakage protection member (40) extends toward the bottom portion (24) of the housing (20), such that an end portion (46) directed toward the bottom portion (24) is closer to the bottom portion (24) than high-voltage components (12, 14, 16) of the battery system (100).

8. The battery system according to claim 7, wherein the end portion (46) of the leakage protection member (40) is spaced from the bottom portion (24) of the housing (20).

9. The battery system according to any one of the preceding claims, further comprising a plurality of leakage sensors (60) located at different positions of the bottom portion (24).

10. The battery system according to any one of the preceding claims, wherein the at least one leakage sensor (60) comprises a voltage supply (68) and two electrical sensing elements (62) spaced from each other with respect to the bottom portion (24) of the housing (20) and connected to the voltage supply (68), wherein the detection unit (50) is configured to detect coolant in response to determining a resistance drop and/or current increase between the sensing elements (62) due to the presence of coolant.

11. The battery system according to claim 10, wherein the at least one sensor (60) comprises an electrical resistor (66) connected in parallel to the sensing elements (62), wherein the resistance value of the electrical resistor (60) is higher than the resistance value across the electrical sensing elements (62) in the presence of coolant.

12. The battery system according to any one of the preceding claims 10 to 11, wherein the sensing elements (62) and/or an area (63) between the sensing elements (62) is enclosed by a casing (70), wherein the casing (70) includes an opening (72) configured to allow coolant to enter through the opening (72).

13. The battery system according to any one of the preceding claims 10 to 12, wherein the at least one sensor (60) further comprising a rib (80) that is positioned in the area (63) between the sensing elements (62).

14. The battery system according to any one of the preceding claims 10 to 13, wherein the at least one sensor (60) further comprising a plurality of trenches (82) on the rib (80).

15. A vehicle comprising the battery system (100) according to any one of the preceding claims.

## Patentansprüche

1. Batteriesystem (100), umfassend:
eine Vielzahl von Aufnahmekammern (26) in einem Gehäuse (20) mit einer Vielzahl von Seitenabschnitten (21, 22, 23), wobei jede Aufnahmekammer (26) eine Vielzahl von Batteriezellen (29) und eine Kühlplatte (28) umfasst;
einen Kühlverteiler (30) innerhalb des Gehäuses (20), der einen vertikal verlaufenden Abschnitt (32) umfasst, der vertikal entlang eines Seitenabschnitts (21, 22, 23) des Gehäuses (20) verläuft, wobei der Kühlverteiler (30) mit jeder der Vielzahl von Kühlplatten (28) verbunden ist;
**dadurch gekennzeichnet, dass**
die Vielzahl der Aufnahmekammern (26) im Gehäuse (20) übereinander angeordnet ist;
ein Leckageschutzelement (40), das mindestens einen Abschnitt des Kühlverteilers (30) umschließt, wobei das Leckageschutzelement (40) in Richtung eines unteren Abschnitts (24) des Gehäuses (20) entlang des Kühlverteilers (30) verläuft, sodass Kühlmittel, das aus dem Kühlverteiler (30) ausläuft, durch das Leckageschutzelement (40) in Richtung des unteren Abschnitts (24) des Gehäuses (20) abgeleitet wird; und
eine Detektionseinheit (50), die mindestens einen Leckagesensor (60) umfasst, der am unteren Abschnitt (24) des Gehäuses (20) positioniert und konfiguriert ist, um Kühlmittel zu detektieren, das durch das Leckageschutzelement (40) in Richtung des unteren Abschnitts (24) abgeleitet wird.

2. Batteriesystem nach Anspruch 1, wobei der Kühlverteiler (30) mit jeder der Vielzahl von Kühlplatten (28) über Anschlussstellen (36) verbunden ist, und
das Leckageschutzelement (40) ferner die Anschlussstelle (36) abdeckt, sodass die Anschlussstelle (36) durch das Leckageschutzelement (40) umschlossen ist, wobei das Leckageschutzelement (40) konfiguriert ist, um Kühlmittel, das aus der Anschlussstelle (36) ausläuft, in Richtung des unteren Abschnitts (24) des Gehäuses (20) abzuleiten.

3. Batteriesystem nach Anspruch 2, wobei der Kühlverteiler (30) Verteilerverzweigungsabschnitte (34) umfasst, die von dem vertikal verlaufenden Abschnitt (32) in Richtung der Anschlussstellen (36) zu den Kühlplatten (28) abzweigen, wobei das Leckageschutzelement (40) einen Leckageschutzverzweigungsabschnitt (44) umfasst, der den Verteilerverzweigungsabschnitt (34) und die Anschlussstelle (36) umschließt.

4. Batteriesystem nach einem der vorhergehenden Ansprüche, wobei das Leckageschutzelement (40) einstückig ausgebildet ist.

5. Batteriesystem nach einem der vorhergehenden Ansprüche, wobei das Leckageschutzelement (40) aus einem flexiblen Kunststoff hergestellt ist.

6. Batteriesystem nach einem der vorhergehenden Ansprüche, wobei das Leckageschutzelement (40) mit mindestens einem Seitenabschnitt (21, ..., 23) des Gehäuses (20) verbunden ist, um eine Anschlussstelle zwischen zwei Seitenabschnitten (21, 22, 23) abzudichten.

7. Batteriesystem nach einem der vorhergehenden Ansprüche, wobei das Leckageschutzelement (40) in Richtung des unteren Abschnitts (24) des Gehäuses (20) verläuft, sodass sich ein in Richtung des unteren Abschnitts (24) gerichteter Endabschnitt (46) näher an dem unteren Abschnitt (24) befindet als Hochspannungskomponenten (12, 14, 16) des Batteriesystems (100).

8. Batteriesystem nach Anspruch 7, wobei der Endabschnitt (46) des Leckageschutzelements (40) von dem unteren Abschnitt (24) des Gehäuses (20) beabstandet ist.

9. Batteriesystem nach einem der vorhergehenden Ansprüche, ferner umfassend eine Vielzahl von Leckagesensoren (60), die an verschiedenen Positionen des unteren Abschnitts (24) platziert sind.

10. Batteriesystem nach einem der vorhergehenden Ansprüche, wobei der mindestens eine Leckagesensor (60) eine Spannungsversorgung (68) und zwei elektrische Erfassungselemente (62) umfasst, die in Bezug auf den unteren Abschnitt (24) des Gehäuses (20) voneinander beabstandet und mit der Spannungsversorgung (68) verbunden sind, wobei die Detektionseinheit (50) so konfiguriert ist, dass sie Kühlmittel als Reaktion auf ein Bestimmen eines Widerstandsabfalls und/oder Stromanstiegs zwischen den Erfassungselementen (62) aufgrund der Anwesenheit von Kühlmittel detektiert.

11. Batteriesystem nach Anspruch 10, wobei der mindestens eine Sensor (60) einen elektrischen Widerstand (66) umfasst, der parallel zu den Erfassungselementen (62) geschaltet ist, wobei der Widerstandswert des elektrischen Widerstands (60) in der Anwesenheit von Kühlmittel höher ist als der Widerstandswert an den elektrischen Erfassungselementen (62).

12. Batteriesystem nach einem der vorhergehenden Ansprüche 10 bis 11, wobei die Erfassungselemente (62) und/oder ein Bereich (63) zwischen den Erfassungselementen (62) von einer Verkleidung (70) umschlossen sind, wobei die Verkleidung (70) eine Öffnung (72) beinhaltet, die so konfiguriert ist, dass Kühlmittel durch die Öffnung (72) eintreten kann.

13. Batteriesystem nach einem der vorhergehenden Ansprüche 10 bis 12, wobei der mindestens eine Sensor (60) ferner eine Rippe (80) umfasst, die in dem Bereich (63) zwischen den Sensorelementen (62) positioniert ist.

14. Batteriesystem nach einem der vorhergehenden Ansprüche 10 bis 13, wobei der mindestens eine Sensor (60) ferner eine Vielzahl von Kerben (82) auf der Rippe (80) umfasst.

15. Fahrzeug, das das Batteriesystem (100) nach einem der vorhergehenden Ansprüche umfasst.

## Revendications

1. Système de batterie (100), comportant :
une pluralité de chambres de réception (26) dans un boîtier (20) avec une pluralité de parties latérales (21, 22, 23), dans lequel chaque chambre de réception (26) comporte une pluralité de cellules de batterie (29) et une plaque de refroidissement (28) ;
un collecteur de refroidissement (30) à l'intérieur du boîtier (20) comportant une partie s'étendant verticalement (32) qui s'étend verticalement le long d'une partie latérale (21, 22, 23) du boîtier (20), dans lequel le collecteur de refroidissement (30) est connecté à chacune de la pluralité de plaques de refroidissement (28) ;
**caractérisé en ce que**,
la pluralité de chambres de réception (26) sont disposées les unes sur les autres dans le boîtier (20) ;
un organe de protection contre les fuites (40) entourant au moins une partie du collecteur de refroidissement (30), dans lequel l'organe de protection contre les fuites (40) s'étend vers une partie inférieure (24) du boîtier (20) le long du collecteur de refroidissement (30) de sorte que le liquide de refroidissement qui fuit du collecteur de refroidissement (30) soit vidangé à travers l'organe de protection contre les fuites (40) vers la partie inférieure (24) du boîtier (20) ; et
une unité de détection (50) comportant au moins un capteur de fuite (60) positionné au niveau de la partie inférieure (24) du boîtier (20) et configurée pour détecter le liquide de refroidissement vidangé vers la partie inférieure (24) par l'organe de protection contre les fuites (40).

2. Système de batterie selon la revendication 1, dans lequel le collecteur de refroidissement (30) est connecté à chacune de la pluralité de plaques de refroidissement (28) par le biais d'interfaces (36), et
l'organe de protection contre les fuites (40) recouvre en outre l'interface (36), de sorte que l'interface (36) soit entourée par l'organe de protection contre les fuites (40), dans lequel l'organe de protection contre les fuites (40) est configuré pour vidanger le liquide de refroidissement qui fuit de l'interface (36) vers la partie inférieure (24) du boîtier (20).

3. Système de batterie selon la revendication 2, dans lequel le collecteur de refroidissement (30) comporte des parties de ramification de collecteur (34) qui se ramifient depuis la partie s'étendant verticalement (32) vers les interfaces (36) jusqu'aux plaques de refroidissement (28), dans lequel l'organe de protection contre les fuites (40) comporte une partie de ramification de protection contre les fuites (44) qui entoure la partie de ramification de collecteur (34) et l'interface (36).

4. Système de batterie selon l'une quelconque des revendications précédentes, dans lequel l'organe de protection contre les fuites (40) est formé d'un seul tenant.

5. Système de batterie selon l'une quelconque des revendications précédentes, dans lequel l'organe de protection contre les fuites (40) est constitué d'un plastique souple.

6. Système de batterie selon l'une quelconque des revendications précédentes, dans lequel l'organe de protection contre les fuites (40) est connecté à au moins une partie latérale (21, ..., 23) du boîtier (20) pour sceller une interface entre deux parties latérales (21, 22, 23).

7. Système de batterie selon l'une quelconque des revendications précédentes, dans lequel l'organe de protection contre les fuites (40) s'étend vers la partie inférieure (24) du boîtier (20), de sorte qu'une partie d'extrémité (46) dirigée vers la partie inférieure (24) soit plus proche de la partie inférieure (24) que des composants haute tension (12, 14, 16) du système de batterie (100).

8. Système de batterie selon la revendication 7, dans lequel la partie d'extrémité (46) de l'organe de protection contre les fuites (40) est espacée de la partie inférieure (24) du boîtier (20).

9. Système de batterie selon l'une quelconque des revendications précédentes, comportant en outre une pluralité de capteurs de fuite (60) situés à différentes positions de la partie inférieure (24).

10. Système de batterie selon l'une quelconque des revendications précédentes, dans lequel l'au moins un capteur de fuite (60) comporte une alimentation en tension (68) et deux éléments de détection électriques (62) espacés l'un de l'autre par rapport à la partie inférieure (24) du boîtier (20) et connectés à l'alimentation en tension (68), dans lequel l'unité de détection (50) est configurée pour détecter du liquide de refroidissement en réponse à la détermination d'une chute de résistance et/ou d'une augmentation de courant entre les éléments de détection (62) en raison de la présence de liquide de refroidissement.

11. Système de batterie selon la revendication 10, dans lequel l'au moins un capteur (60) comporte une résistance électrique (66) connectée en parallèle aux éléments de détection (62), dans lequel la valeur de résistance de la résistance électrique (60) est supérieure à la valeur de résistance à travers les éléments de détection électriques (62) en présence de liquide de refroidissement.

12. Système de batterie selon l'une quelconque des revendications 10 à 11 précédentes, dans lequel les éléments de détection (62) et/ou une zone (63) entre les éléments de détection (62) sont entourés par un carter (70), dans lequel le carter (70) inclut une ouverture (72) configurée pour permettre au liquide de refroidissement de pénétrer à travers l'ouverture (72).

13. Système de batterie selon l'une quelconque des revendications 10 à 12 précédentes, dans lequel l'au moins un capteur (60) comporte en outre une nervure (80) qui est positionnée dans la zone (63) entre les éléments de détection (62).

14. Système de batterie selon l'une quelconque des revendications 10 à 13 précédentes, dans lequel l'au moins un capteur (60) comporte en outre une pluralité de tranchées (82) sur la nervure (80).

15. Véhicule comportant le système de batterie (100) selon l'une quelconque des revendications précédentes.
